# EUROPÄISCHE PATENTSCHRIFT

(11) **EP 1 981 371 B1**
(45) Veröffentlichungstag und Bekanntmachung des Hinweises auf die Patenterteilung: **01.08.2018**
(21) Anmeldenummer: 06817494.5
(22) Anmeldetag: 20.12.2006
(51) Int. Cl.: A47B 88/00, E05F 15/00, F16D 7/02, F16D 7/04, F16D 7/10, F16D 41/20, A47B 88/457, A47B 88/463

(54) **AUSSTOSSER MIT RUTSCHKUPPLUNG**
EJECTOR WITH A FRICTION CLUTCH
EJECTEUR A ACCOUPLEMENT COULISSANT

(30) Priorität: 08.02.2006 AT 1882006
(43) Veröffentlichungstag der Anmeldung: 22.10.2008
(73) Patentinhaber: Julius Blum GmbH, 6973 Höchst (AT)
(72) Erfinder: GASSER, Ingo, 6973 Höchst (AT); HUBER, Edgart, 6971 Hard (AT)
(74) Vertreter: Torggler & Hofinger Patentanwälte
(86) Internationale Anmeldenummer: PCT/AT2006/000527
(87) Internationale Veröffentlichungsnummer: WO 2007/090210

(56) Entgegenhaltungen:
- EP-A- 1 201 951
- WO-A-2006/017864
- DE-A1- 19 615 415
- DE-U1- 20 308 256
- US-A1- 2005 091 928
- US-A1- 2006 016 283

## Beschreibung

Die vorliegende Erfindung betrifft eine Ausstoßvorrichtung für ein in oder an einem Möbelkorpus bewegbar gelagertes Möbelteil, mit einem Ausstoßer, einer Antriebseinheit und einer Rutschkupplung, wobei die Rutschkupplung derart ausgebildet ist, dass sie bei Überschreitung eines vorgegebenen Drehmoments die Antriebseinheit und den Ausstoßer voneinander entkoppelt.

Eine derartige Ausstoßvorrichtung geht beispielsweise aus den Fig. 10 und 11 der AT 413 472 B hervor. Die dort gezeigte Rutschkupplung besteht aus einem Federring, welcher sich bei übermäßiger Belastung aufweitet und über mit dem anzutreibenden Ausstoßer drehfest verbundene Mitnahmenocken gleitet, wodurch eine Entkoppelung der Antriebseinheit und des Ausstoßers voneinander erfolgt. WO 2006/017864 A1 offenbart eine Ausstoßvorrichtung für ein bewegbares Möbelteil gemäß dem Oberbegriff des Anspruchs 1.

Aufgabe der Erfindung ist es, eine kompaktere Bauweise solch eine Ausstoßvorrichtung bereitzustellen. Diese Aufgabe wird durch eine Ausstoßvorrichtung mit den Merkmalen des Anspruchs 1 gelöst. Durch die Integration der Rutschkupplung im Hebel ergibt sich eine besonders einfache Bauweise der Ausstoßvorrichtung, da sowohl eine handelsübliche Antriebseinheit als auch ein handelsübliches Getriebe, welches üblicherweise zwischen Antriebseinheit und Hebel geschalten wird, verwendet werden kann.

Der Ausstoßer der Ausstoßvorrichtung wird durch die Antriebseinheit über einen begrenzten Winkelbereich verschwenkt. Zum Ausstoßen des bewegbaren Möbelteils wird der Ausstoßer in Richtung des bewegbaren Möbelteils verschwenkt, um die Ausstoßkraft auf dieses aufzubringen. Danach muss der Ausstoßer wieder in seine Ausgangslage gebracht werden, was durch ein Verschwenken des Ausstoßers in eine in Bezug auf den Ausstoßvorgang entgegen gesetzte Drehrichtung erfolgt.

Die Rutschkupplung dient der Vermeidung von Beschädigungen der Antriebseinheit, welche durch eine übermäßige Kraftausübung auf den Ausstoßer, der mit der Antriebseinheit gekoppelt ist, verursacht werden können.

Beispielsweise kann es vorkommen, dass das bewegbare Möbelteil von einem Benutzer mit relativ großer Kraft in seine geschlossene Endlage gestoßen wird, bevor sich der Ausstoßer in seinen Ausgangszustand zurück bewegt hat. Prallt das bewegbare Möbelteil auf den Ausstoßer, kann es durch den entstehenden Kraftstoß, welcher über den Ausstoßer auf die Antriebseinheit übertragen wird, zu einer Beschädigung oder gar Zerstörung der Antriebseinheit kommen.

Andererseits kann es zu einer Blockierung des bewegbaren Möbelteils während des Ausstoßvorganges kommen. In diesem Fall ist ebenfalls eine Beschädigung der Antriebseinheit zu befürchten, falls keine elektronische Regelung vorgesehen ist, welche die Antriebseinheit bei Überschreitung einer vorgegebenen Stromstärke abschaltet.

Durch die erfindungsgemäße Konstruktion der Rutschkupplung kann das Drehmoment, bei welchem die Entkoppelung der Antriebseinheit vom Ausstoßer erfolgt (Überrastdrehmoment), für jede der oben geschilderten Situationen unterschiedlich gewählt werden. Beispielsweise kann das Überrastdrehmoment nach Beendigung des Ausstoßvorganges während der Rückstellung des Ausstoßers in seine Ausgangslage relativ niedrig gewählt werden, da es bei einem ordnungsgemäßen Betrieb ohnehin zu keiner externen Kraftausübung auf den Ausstoßer kommen sollte.

Andererseits sollte das Überrastdrehmoment während des Ausstoßvorganges relativ hoch eingestellt sein, um ein Durchrutschen der Rutschkupplung während eines an sich ordnungsgemäßen Ausstoßvorganges zu verhindern.

Konstruktiv besonders einfach ist eine Ausführungsform der Erfindung, bei welcher vorgesehen ist, dass die Feder derart mit den beiden Teilen zusammenwirkt, dass bei einer Verdrehung der beiden Teile in einer ersten der beiden Drehrichtungen eine Verringerung des Durchmessers der Feder erfolgt. Durch die Verringerung des Durchmessers der Feder wird eine Verstärkung der Koppelungskraft der beiden Teile der Rutschkupplung bewirkt. Dies ist gleichbedeutend mit einer Erhöhung des Überrastdrehmoments, dh das Drehmoment, bei welchem die Entkoppelung erfolgt, erhöht sich gegenüber dem Wert, der vor der Verringerung des Durchmessers der Feder vorlag. Weiters kann vorgesehen sein, die Feder derart mit den beiden Teilen zusammenwirkt, dass bei einer Verdrehung der beiden Teile in einer zweiten der beiden Drehrichtungen eine Aufweitung der Feder erfolgt. Hierdurch erfolgt eine Verringerung des Überrastdrehmoments gegenüber dem vor der Aufweitung der Feder vorliegenden Überrastdrehmoment, insbesondere auch gegenüber dem Überrastdrehmoment, welches bei Verringerung des Durchmessers der Feder vorliegt.

Prinzipiell ist bevorzugt, dass die Feder als Schraubenfeder ausgebildet ist, da durch die räumliche Erstreckung der Schraubenfeder in Richtung der Federachse eine gute Umschlingung durch die Feder erzielt werden kann. Denkbar wäre jedoch auch die Verwendung einer als Spiralfeder ausgebildeten Feder.

Die Wirkungsweise der erfindungsgemäßen Rutschkupplung wird noch verstärkt, wenn vorgesehen ist, dass das erste Teil Mitnehmerstifte aufweist und das zweite Teil eine Zahnscheibe aufweist, wobei die Feder im gekoppelten Zustand der Rutschkupplung die Mitnehmerstifte gegen die Zahnscheibe drückt. Übersteigt das Überrastdrehmoment einen vorgegebenen Wert, rutschen die Mitnehmerstifte gegenüber der Zahnscheibe durch. Durch die vorstehend beschriebenen vorteilhaften Maßnahmen bezüglich der Feder wird dieser Effekt noch verstärkt, da es bei einer Verringerung des Durchmessers der Feder zu einem erschwerten Durchrutschen (und daher zu einem erhöhten Überrastdrehmoment) und unter einer Aufweitung der Feder zu einem erleichterten Durchrutschen (und daher zu einer Verringerung des Überrastdrehmoments) kommt.

An sich kann der Ausstoßer entweder mit dem ersten oder zweiten Teil der Rutschkupplung gekoppelt sein. Besonders bevorzugt ist eine Ausführungsform, bei welcher der erste Teil der Rutschkupplung mit dem Ausstoßer gekoppelt ist und das zweite Teil der Rutschkupplung mit der Antriebseinheit gekoppelt ist.

Es kann gewünscht sein, die Rutschkupplung derart auszubilden, dass es in einer der beiden möglichen Drehrichtung der beiden Teile der Rutschkupplung zueinander überhaupt nicht zu einer Entkoppelung kommt. Dies kann beispielsweise dann gewünscht sein, wenn während des Ausstoßvorganges ohnehin eine elektronische Schutzregelung vorhanden ist, die eine übermäßige Kraftausübung durch die Antriebseinheit vermeidet. In diesem Fall kann während des Ausstoßvorganges ein besonders hohes Drehmoment auf den Ausstoßer und damit das bewegbare Möbelteil übertragen werden, ohne dass es zu einer Auslösung der Rutschkupplung kommt. Gleichzeitig ist aber sichergstellt, dass es während der Zurückstellung des Ausstoßers in seine Ausgangslage zu keiner Übertragung von schädlichen Kräften über den Ausstoßer auf die Antriebseinheit kommen kann.

Besonders bevorzugt ist vorgesehen, dass die Achse, um welche die beiden Teile der Rutschkupplung zueinander drehbar sind, die Drehachse für den Hebel bildet.

Weitere Vorteile und Einzelheiten der Erfindung ergeben sich anhand der nachfolgenden Figuren sowie der dazugehörigen Figurenbeschreibung. Dabei zeigen:
Fig. 1 eine perspektivische Ansicht eines Möbels mit mehreren erfindungsgemäßen Ausstoßvorrichtungen,
Fig. 2 eine perspektivische Ansicht einer erfindungsgemäßen Ausstoßvorrichtung,
Fig. 3 die in Fig. 2 dargestellte Ausstoßvorrichtung ohne Gehäuse,
Fig. 4a, 4b eine Teilansicht der in den Fig. 2 und 3 dargestellten Ausstoßvorrichtung in perspektivischer Ansicht und in Explosionsdarstellung,
Fig. 5a, 5b eine Detailansicht zur Fig. 4 in perspektivischer Ansicht und Draufsicht, und
Fig. 6a, 6b, 6c eine weitere Detailansicht in Draufsicht, in einer ersten Schnittdarstellung und in einer zweiten Schnittdarstellung.

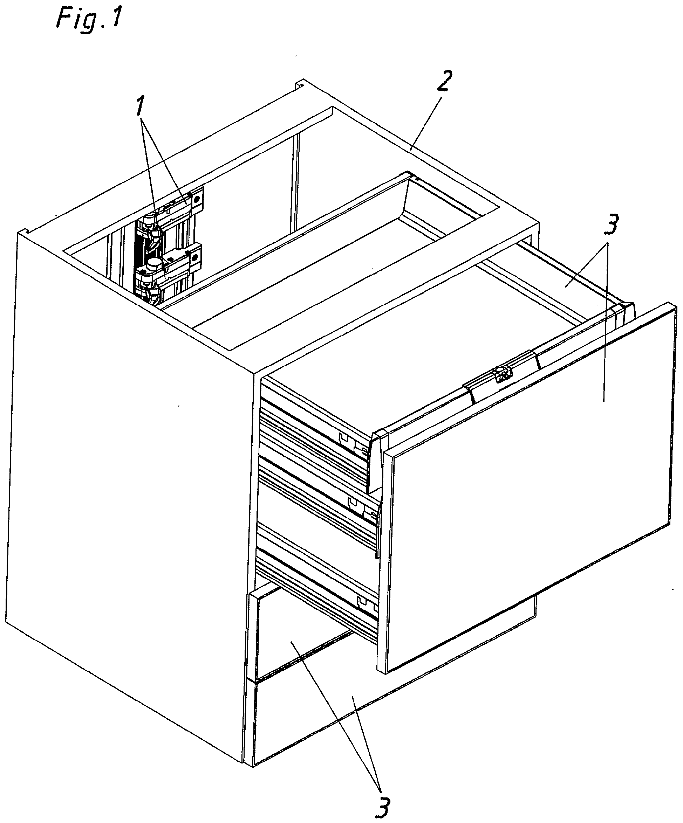

Fig. 1 zeigt ein Möbel mit einem Möbelkorpus 2 und mehreren bewegbar im Möbelkorpus 2 gelagerten Möbelteilen 3, welche in diesen Ausführungsformen als Schubladen ausgebildet sind. Ebenfalls erkennbar sind an der Rückseite des Möbelkorpus 2 zwei erfindungsgemäße Ausstoßvorrichtungen 1, welche in diesem Ausführungsbeispiel an einem Trägerelement angebracht sind.

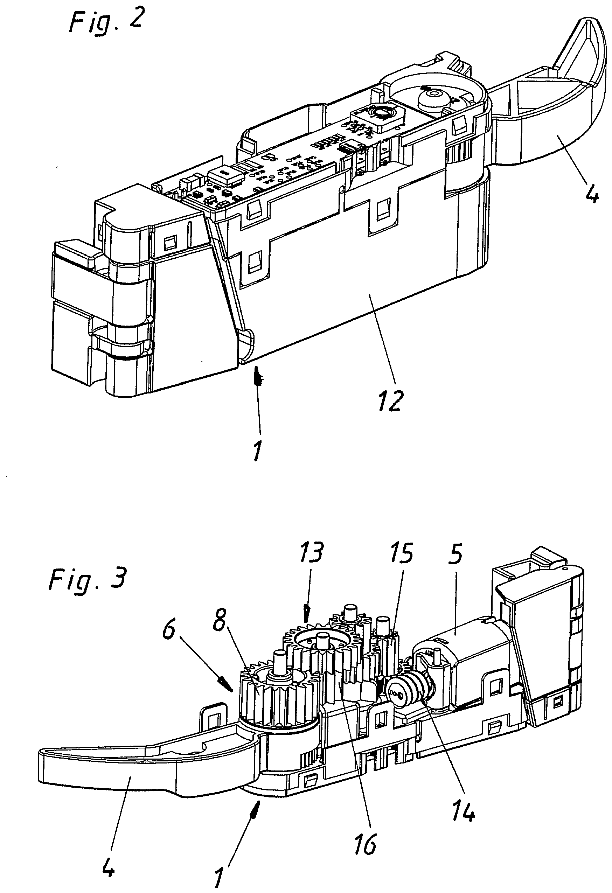

Fig. 2 zeigt eine der Ausstoßvorrichtungen 1 in perspektivischer Ansicht, wobei insbesondere der in dieser Ausführungsform als Hebel ausgebildete Ausstoßer 4 erkennbar ist. Der Ausstoßer 4 steht von einem Gehäuseteil 12 ab, wobei im Gehäuseteil 12 unter anderem ein Getriebe 13, die Antriebseinheit 5 sowie elektronische Schaltungen untergebracht sind.

In Fig. 3 wurde die Abdeckung des Gehäuseteils 12 entfernt, was einen Einblick in den Aufbau der erfindungsgemäßen Ausstoßvorrichtung 1 gewährt. Erkennbar sind eine in diesem Ausführungsbeispiel als Elektromotor ausgebildete Antriebseinheit 5, welche über eine Spindel 14 die erste Stufe 15 eines Getriebes 13 antreibt. Die letzte Stufe 16 des Getriebes 13 koppelt mit dem zweiten Teil 8 der Rutschkupplung 6, welche in diesem Ausführungsbeispiel in dem als Hebel ausgeführten Ausstoßer 4 integriert ist.

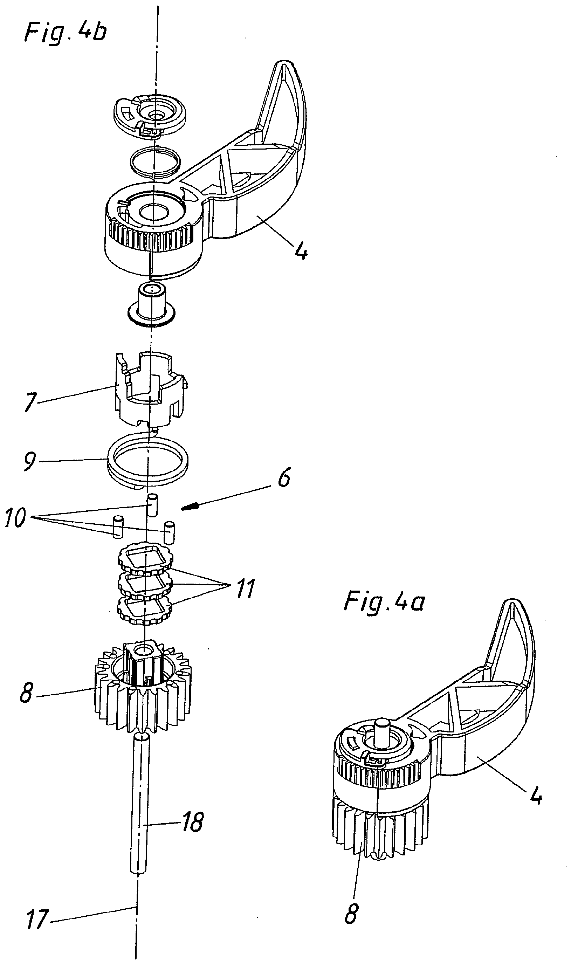

Die Fig. 4a und 4b zeigen nunmehr den Aufbau eines Ausführungsbeispiels einer erfindungsgemäßen Rutschkupplung 6 im Detail. Insbesondere zeigt Fig. 4b, dass sowohl das zweite Teil 8 als auch das erste Teil 7 der Rutschkupplung 6 entlang einer gemeinsamen Achse 17 angeordnet sind. Das zweite Teil 8 ist dabei drehfest mit einer Welle 18 verbunden. In diesem Ausführungsbeispiel sind drei Zahnscheiben 11 ihrerseits drehfest mit dem zweiten Teil 8 verbunden. Mit dem ersten Teil 7 der Rutschkupplung 6 sind diesem Ausführungsbeispiel drei Mitnehmerstifte 10 derart verbunden, dass sie zwar bei einer Drehung um die Achse 17 das erste Teil 7 mitnehmen, jedoch eine gewisse radiale Beweglichkeit in Bezug auf die Achse 17 aufweisen. Eine in diesem Ausführungsbeispiel als Schraubenfeder ausgeführte Feder 9 ist mit ihrem einen Ende mit dem ersten Teil 7 und mit ihren anderen Ende mit dem zweiten Teil 8 verbunden und umschlingt die drei Mitnehmerstifte 10.

In gekoppeltem Zustand der Rutschkupplung 6 greifen die drei Mitnehmerstifte 10 in die an den Zahnscheiben 11 erkennbaren Ausnehmungen ein, sodass insgesamt ein ununterbrochener Kraftstrang zwischen der Antriebseinheit 5 und dem Ausstoßer 4 (über das Getriebe 13, das zweite Teil 8, die Zahnscheiben 11, die Mitnehmerstifte 10 und das erste Teil 7) gebildet wird. Verdrehen sich die beiden Teile 7, 8 in einer ersten der beiden möglichen Drehrichtungen, führt dies zu einer Verringerung des Durchmessers der Feder 9, wodurch die Mitnehmerstifte 10 stärker an die Zahnscheiben 11 gedrückt werden. Dies führt zu einer Erhöhung des Überrastdrehmoments. Werden hingegen die beiden Teile 7, 8 in der zweiten der beiden Drehrichtungen zueinander verdreht, führt dies zu einer Aufweitung der Feder 9, wodurch die Mitnehmerstifte 10 von den Zahnscheiben 11 weg radial nach außen ausweichen können. Dies unterbricht den Kraftstrang zwischen der Antriebseinheit 5 und dem Ausstoßer 4 und stellt den entkoppelten Zustand der Rutschkupplung 6 dar.

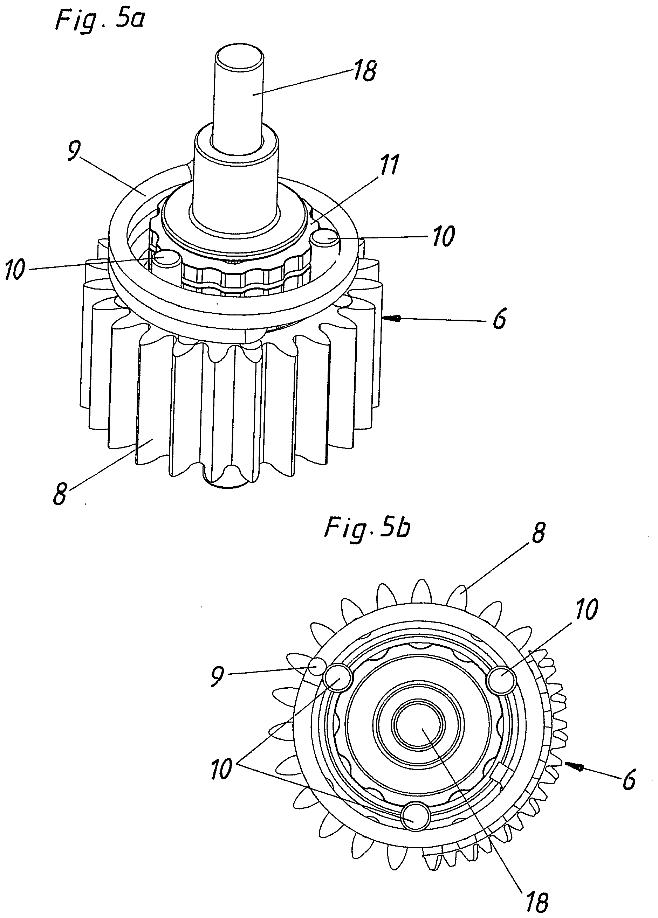

In den Fig. 5a und 5b ist die Rutschkupplung 6 in isolierter Form einmal in perspektivischer Ansicht und einmal in Draufsicht dargestellt.

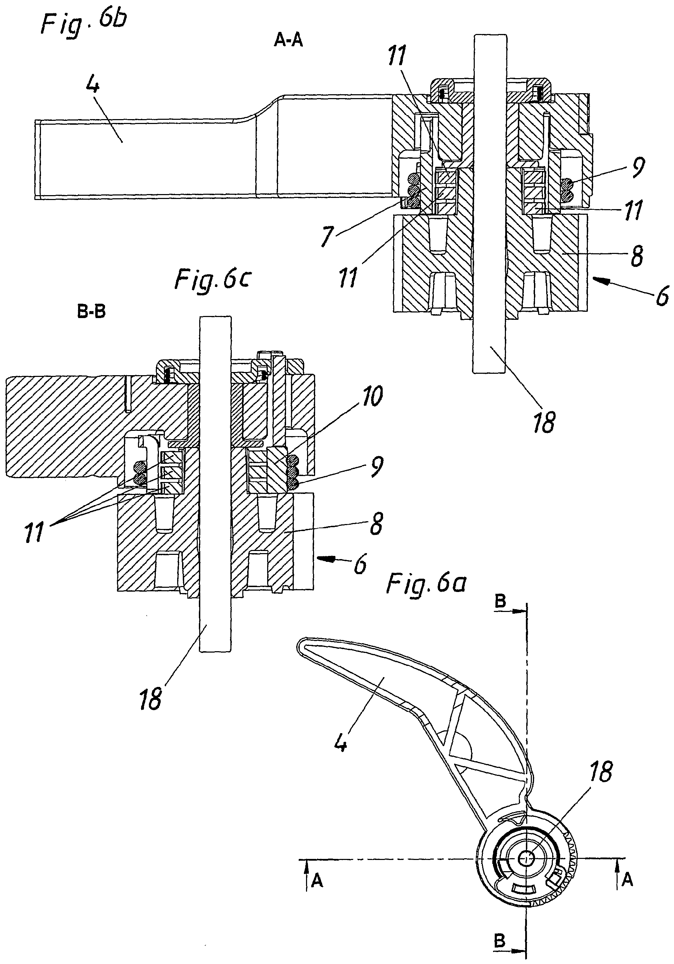

Die Fig. 6b und 6c zeigen Schnittdarstellungen entsprechend den in Fig. 6a gezeichneten Linien. Erkennbar ist in diesen Fig. insbesondere die Integration der Rutschkupplung 6 im Ausstoßer 4.

## Patentansprüche

1. Ausstoßvorrichtung (1) für ein in oder an einem Möbelkorpus (2) bewegbar gelagertes Möbelteil (3), mit einem Ausstoßer (4), einer Antriebseinheit (5) und einer Rutschkupplung (6), wobei die Rutschkupplung (6) derart ausgebildet ist, dass sie bei Überschreitung eines vorgegebenen Drehmoments die Antriebseinheit (5) und den Ausstoßer (4) voneinander entkoppelt, wobei der Ausstoßer (4) als Hebel ausgebildet ist dadurch gekennzeignet, dass die Rutschkupplung (6) im Hebel integriert ist.

2. Ausstoßvorrichtung (1) nach Anspruch 1, **dadurch gekennzeichnet, dass** die Rutschkupplung (6) zwei zueinander bezüglich zweier Drehrichtungen drehbare Teile (7, 8) umfasst, wobei eine Feder (9) vorgesehen ist, die derart mit den beiden Teilen (7, 8) zusammenwirkt, dass das Drehmoment, bei dem die Entkoppelung erfolgt, für die beiden Drehrichtungen der beiden Teile (7, 8) unterschiedlich ist.

3. Ausstoßvorrichtung (1) nach Anspruch 2, **dadurch gekennzeichnet, dass** die Feder (9) als Schraubenfeder ausgebildet ist.

4. Ausstoßvorrichtung (1) nach Anspruch 2 oder 3, **dadurch gekennzeichnet, dass** die Feder (9) derart mit den beiden Teilen (7, 8) zusammenwirkt, dass bei einer Verdrehung der beiden Teile (7, 8) in einer ersten der beiden Drehrichtungen eine Verringerung des Durchmessers der Feder (9) erfolgt.

5. Ausstoßvorrichtung (1) nach einem der Ansprüche 2 bis 4, **dadurch gekennzeichnet, dass** die Feder (9) derart mit den beiden Teilen (7, 8) zusammenwirkt, dass bei einer Verdrehung der beiden Teile (7, 8) in einer zweiten der beiden Drehrichtungen eine Aufweitung der Feder (9) erfolgt.

6. Ausstoßvorrichtung (1) nach einem der Ansprüche 2 bis 5, **dadurch gekennzeichnet, dass** das erste Teil (7) Mitnehmerstifte (10) aufweist und das zweite Teil (8) eine Zahnscheibe (11) aufweist, wobei die Feder (9) im gekoppelten Zustand der Rutschkupplung (6) die Mitnehmerstifte (10) gegen die Zahnscheibe (11) drückt.

7. Ausstoßvorrichtung (1) nach einem der Ansprüche 2 bis 6, **dadurch gekennzeichnet, dass** der erste Teil (7) der Rutschkupplung (6) mit dem Ausstoßer (4) gekoppelt ist und das zweite Teil (8) der Rutschkupplung (6) mit der Antriebseinheit (5) gekoppelt ist.

8. Ausstoßvorrichtung (1) nach einem der Ansprüche 2 bis 7, **dadurch gekennzeichnet, dass** die Rutschkupplung (6) nur bei einer der beiden Drehrichtungen der beiden Teile (7, 8) die Antriebseinheit (5) und den Ausstoßer (4) voneinander entkoppelt.

9. Ausstoßvorrichtung (1) nach Anspruch 1, **dadurch gekennzeichnet, dass** die Achse (17), um welche die beiden Teile (7, 8) der Rutschkupplung (6) zueinander drehbar sind, die Drehachse für den Hebel bildet.

## Claims

1. An ejection device (1) for a furniture part (3) movably-mounted in or on a furniture carcass (2), with an ejector (4), a drive unit (5) and a slipping clutch (6), wherein the slipping clutch (6) is configured such that it decouples the drive unit (5) and the ejector (4) from each other when a predetermined torque is exceeded, wherein the ejector (4) is configured as a lever, **characterized in that** the slipping clutch (6) is integrated into the lever.

2. The ejection device (1) according to claim 1, **characterized in that** the slipping clutch (6) includes two portions (7, 8) which are rotatable relative to each other with respect to two directions of rotation, wherein a spring (9) is provided which co-operates with the two portions (7, 8) such that the torque, at which decoupling occurs, is different for the two directions of rotation of the two portions (7, 8).

3. The ejection device (1) according to claim 2, **characterized in that** the spring (9) is configured as a helical spring.

4. The ejection device (1) according to claim 2 or 3, **characterized in that** the spring (9) co-operates with the two portions (7, 8) such that upon a rotary movement of the two portions (7, 8) in a first one of the two directions of rotation, a reduction in the diameter of the spring (9) is brought about.

5. The ejection device (1) according to one of the claims 2 to 4, **characterized in that** the spring (9) co-operates with the two portions (7, 8) such that upon a rotary movement of the two portions in a second one of the two directions of rotation, an expansion of the spring (9) is brought about.

6. The ejection device (1) according to one of the claims 2 to 5, **characterized in that** the first portion (7) has entrainment pins (10) and the second portion (8) has a toothed disc (11), wherein in the coupled condition of the slipping clutch (6), the spring (9) presses the entrainment pins (10) against the toothed disc (11).

7. The ejection device (1) according to one of the claims 2 to 6, **characterized in that** the first portion (7) of the slipping clutch (6) is coupled to the ejector (4) and the second portion (8) of the slipping clutch (6) is coupled to the drive unit (5).

8. The ejection device (1) according to one of the claims 2 to 7, **characterized in that** the slipping clutch (6) decouples the drive unit (5) and the ejector (4) from each other only in one of the two directions of rotation of the two portions (7, 8).

9. The ejection device (1) according to claim 1, **characterized in that** the axis, about which the two portions (7, 8) of the slipping clutch (6) are rotatable relative to each other, forms the pivoting axis for the lever.

## Revendications

1. Dispositif éjecteur (1) pour une partie de meuble (3) logée de façon mobile dans ou sur un corps de meuble (2), avec un éjecteur (4), une unité d'entraînement (5) et un accouplement à glissement (6), l'accouplement à glissement (6) étant conçu de manière telle qu'il découple l'un de l'autre l'unité d'entraînement (5) et l'éjecteur (4) lors du dépassement d'un couple de rotation prédéfini, dans lequel l'éjecteur (4) est conçu comme levier, **caractérisé en ce que** l'accouplement à glissement (6) est intégré dans le levier.

2. Dispositif éjecteur (1) selon la revendication 1, **caractérisé en ce que** l'accouplement à glissement (6) comprend deux parties (7, 8) rotatives l'une par rapport à l'autre relativement à deux sens de rotation, dans lequel un ressort (9) est prévu qui interagit de manière telle avec les deux parties (7, 8) que le couple de rotation, auquel se fait le découplage, est différent pour les deux sens de rotation des deux parties (7, 8).

3. Dispositif éjecteur (1) selon la revendication 2, **caractérisé en ce que** le ressort (9) est conçu comme un ressort hélicoïdal.

4. Dispositif éjecteur (1) selon la revendication 2 ou 3, **caractérisé en ce que** le ressort (9) interagit de manière telle avec les deux parties (7, 8) que lors d'une torsion des deux parties (7, 8) dans un premier des deux sens de rotation a lieu une diminution du diamètre du ressort (9).

5. Dispositif éjecteur (1) selon l'une des revendications 2 à 4, **caractérisé en ce que** le ressort (9) interagit de manière telle avec les deux parties (7, 8) que lors d'une torsion des deux parties (7, 8) dans un deuxième des deux sens de rotation a lieu un élargissement du ressort (9).

6. Dispositif éjecteur (1) selon l'une des revendications 2 à 5, **caractérisé en ce que** la première partie (7) présente des broches d'entraînement (10) et la deuxième partie (8) présente un disque denté (11), dans lequel le ressort (9) dans l'état couplé de l'accouplement à glissement (6) presse les broches d'entraînement (10) contre le disque denté (11).

7. Dispositif éjecteur (1) selon l'une des revendications 2 à 6, **caractérisé en ce que** la première partie (7) de l'accouplement à glissement (6) est couplée à l'éjecteur (4) et la deuxième partie (8) de l'accouplement à glissement (6) est couplée à l'unité d'entraînement (5).

8. Dispositif éjecteur (1) selon l'une des revendications 2 à 7, **caractérisé en ce que** l'accouplement à glissement (6) découple l'un de l'autre l'unité d'entraînement (5) et l'éjecteur (4) uniquement dans l'un des deux sens de rotation des deux parties (7, 8).

9. Dispositif éjecteur (1) selon la revendication 1, **caractérisé en ce que** l'axe (17), autour duquel peuvent tourner l'une par rapport à l'autre les deux parties (7, 8) de l'accouplement à glissement (6), forme l'axe de rotation pour le levier.
